Europäisches Patentamt

European Patent Office

Office européen des brevets

(11) Veröffentlichungsnummer: **0 350 579**
**A1**

(12) **EUROPÄISCHE PATENTANMELDUNG**

(21) Anmeldenummer: 89107422.1

(22) Anmeldetag: 25.04.89

(51) Int. Cl.⁴: **B01D 17/022 , E03F 5/16 ,**
**C02F 1/40**

(30) Priorität: 12.07.88 DE 3823527

(43) Veröffentlichungstag der Anmeldung:
17.01.90 Patentblatt 90/03

(84) Benannte Vertragsstaaten:
**AT BE DE FR IT LU NL**

(71) Anmelder: **Buderus Bau- und**
**Abwassertechnik GmbH**
**Sophienstrasse 52-54 Postfach 12 40**
**D-6330 Wetzlar 1(DE)**

(72) Erfinder: **Amend, Karl Hans**
**Vogelsang 4**
**D-6333 Braunfels-Neukirchen(DE)**

(54) **Abscheider für Leichtflüssigkeiten.**

(57) Der Verbesserung des Abscheidegrades dient der Einsatz eines abscheidewirksamen Materiales, an dem sich die feinsten Schwebeteilchen anlagern und zu größeren Tröpfchen koagulieren können. Als abscheidewirksames Material werden Bürstenkörper 4 im Abscheiderraum eingesetzt. Bei einer vertikalen Anordnung der Bürstenkörper 4 aus einem zentralen Träger 4' und radial nach außen weisenden Borsten 4" ist eine Reinigung durch eine vertikal zu betätigende Abstreifeinrichtung aus einem beweglichen Ringkörper 5 möglich. Separate Reinigungsmaßnahmen außerhalb des Abscheiders können weitgehend entfallen.

Fig. 1

EP 0 350 579 A1

## Abscheider für Leichtflüssigkeiten

Die Erfindung betrifft einen Abscheider nach dem Oberbegriff des Patentanspruches 1.

Abscheider dieser Art stellen einen bekannten Stand der Technik dar. Als abscheidewirksames Material wird in der Regel ein Granulat als Koaleszenzfilter eingesetzt, an dem sich die feinsten Leichtflüssigkeitströpfchen anlagern und zu größeren Tröpfchen verbinden. Diese steigen dann zur Oberfläche auf. Es ist auch bekannt, zu diesem Zweck andere Materialien wie Lochplatten, Filtergewebe oder ähnliches zu verwenden, welche quer oder in Strömungsrichtung angeordnet sind und ebenfalls die Abscheidung wesentlich verbessern. Das abscheidewirksame Material kann unmittelbar im Abscheider selbst oder in einer Nachabscheidestufe eingesetzt werden.

Die Art und der Aufbau des abscheidewirksamen Materiales sind für seine Wirksamkeit von ausschlaggebender Bedeutung. Es muß garantiert sein, daß die Strömung nicht grundsätzlich behindert wird, daß jedoch die Verweilzeit der Flüssigkeit ausreichend ist, um die feinsten Partikel zur Anlagerung an dem Material anzuregen. Dabei dürfen dann die angelagerten, zu größeren Tröpfchen koalierten Teile nicht von der Strömung mitgerissen werden. Diese müssen vielmehr frei zur Oberfläche aufströmen können.

Es soll ein abscheidewirksames Material geschaffen werden, das die notwendigen Eigenschaften zur Erzielung der geforderten Effekte besitzt. Dabei soll nicht nur die Abscheidewirkung hervorragend sein, sondern es soll auch eine äußerst einfache Handhabung des Materiales möglich sein.

Das erfindungsgemäße Material besitzt das im Kennzeichen des Patentanspruches 1 genannte Merkmal.

Anstelle des bisher bekannten Granulates bzw. der Platten- oder Gewebestrukturen wird der Einsatz eines oder mehrerer Bürstenkörper vorgeschlagen. Die im Strömungsweg liegenden Borsten bilden eine relativ dichte, jedoch auch relativ durchlässige Struktur. An diesen weit ausladenden Borsten, die ein völlig ungeordnetes Gewirre darstellen, können sich die feinsten Schwebeteilchen sehr leicht anlagern. Die Strömung wird gerade nur in dem Maße behindert, daß die Abscheidung dieser Teilchen im Höchstmaß erfolgen kann. Dabei ist die Handhabung der Bürstenkörper denkbar einfach, da sie jeweils eine vollständige Einheit bilden.

Je nach dem Aufbau des Abscheiders empfiehlt es sich, mehrere Bürstenkörper in Reihen hintereinander anzuordnen. Durch eine versetzte Anordnung der Körper sind dabei freie Strömungsgassen zu vermeiden. Es ergibt sich eine ganz leichte Umlenkung der Strömung zwischen den Reihen, welche sich auf die Abscheidewirkung günstig auswirkt.

Die Bürstenkörper sollten vorzugsweise als stehende Träger mit radial nach außen weisenden Borsten ausgebildet sein. Diese Körper lassen sich leicht einsetzen und in oberen und unteren Lagern fixieren, wobei sich die Verwendung eines Tragrahmens, der zu den Gehäusewänden mit Abdichtungen versehen ist, empfiehlt. Die radial nach außen weisenden Borsten stehen dabei in unterschiedlichsten Winkeln zur Strömungsrichtung. Das wirkt sich sehr stark auf die Schwebeteilchen aus, die immer wieder mit den Borsten in Berührung kommen. Der Abscheidegrad wird auf diese Weise verbessert.

Für das einwandfreie Funktionieren einer solchen Einrichtung ist eine regelmäßige Wartung und Reinigung des abscheidewirksamen Materiales erforderlich. Das bisher verwandte Material muß deshalb von Zeit zu Zeit aus dem Abscheider herausgenommen und in einem separaten Arbeitsgang durchgespült werden. Diese Reinigung ist bei den erfindungsgemäßen, Bürstenkörpern wesentlich einfacher als bei den bisher bekannten Materialien. Der Aufwand eines separaten Einsatzbehälters mit einer Spüleinrichtung kann sogar ganz entfallen. Da die Bürstenkörper im Wasser des Abscheiders stehen, können sie nämlich mit ringförmigen Abstreifern gereinigt werden, welche von Zeit zu Zeit vertikal über dieselben gezogen werden. Dadurch werden die Borsten von allen Anlagerungen befreit. Eine Herausnahme der Körper zu Reinigungszwecken kann ganz entfallen, bzw. ist nur noch selten erforderlich.

Vorstehend genanntem Zweck genügt ein vertikal beweglicher Ringkörper oberhalb des Bürstenkörpers. Ein solches Abstreifelement läßt sich leicht betätigen, wobei es sich empfiehlt, die Ringkörper aller Bürstenkörper zu einer einheitlichen Abstreifeinrichtung zu verbinden. betätigen, wobei es sich empfiehlt, die Ringkörper aller Bürstenkörper zu einer einheitlichen Abstreifeinrichtung zu verbinden. Die Abstreifelemente können zur Erzeugung einer Brause auch hohl ausgebildet und an einen Spülwasserzulauf angeschlossen sein. Auf diese Weise kann während des Abstreifens gleichzeitig eine Bürstenspülung vorgenommen werden.

Die beigefügte Zeichnung stellt ein Ausführungsbeispiel der Erfindung dar. Es zeigen:

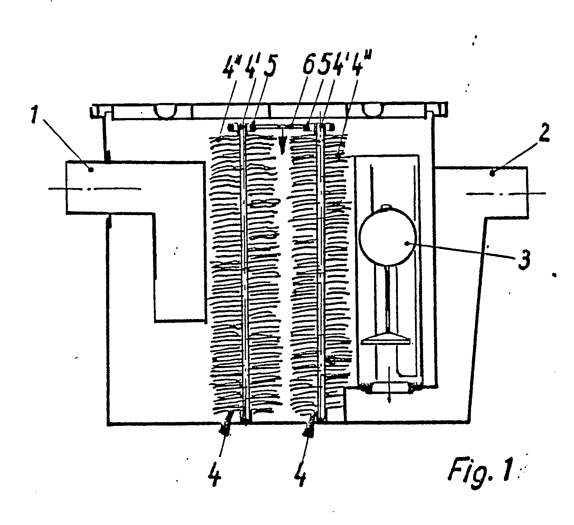

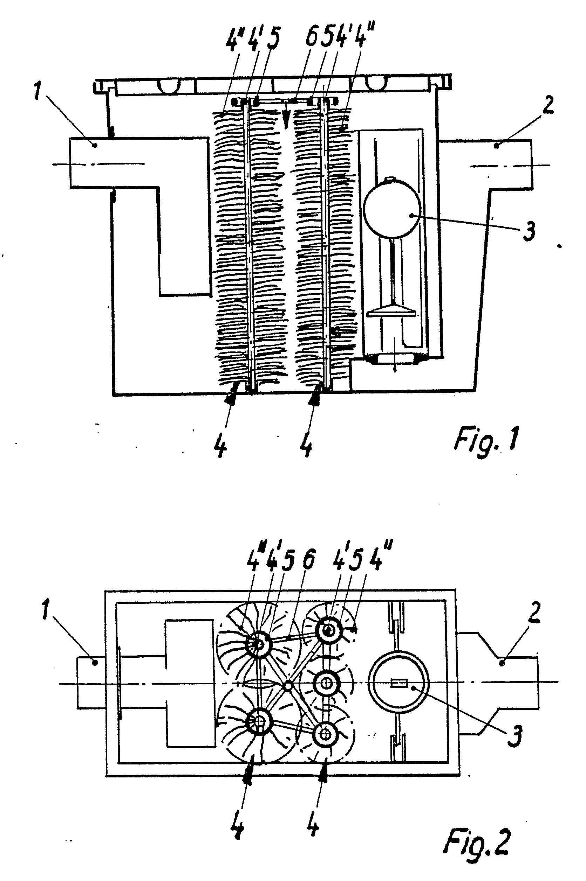

Fig. 1: Einen Längsschnitt durch einen Abscheider und

Fig. 2: Die Draufsicht auf einen geöffneten Abscheider.

Der Abscheider besitzt einen Einlauf 1 und einen Auslauf 2. Dem Auslauf 2 ist ein Schwimmkörper 3 als automatischer Verschluß zugeordnet, was jedoch nicht Bedingung für das Funktionieren der erfindungsgemäßen Einrichtung ist. Im Abscheideraum sitzen Bürstenkörper 4, im dargestellten Fall in zwei hintereinander liegenden Reihen. Diese Bürstenkörper 4 bestehen aus stehenden Trägern 4' mit radial nach außen weisenden Borsten 4", aus Polypropylen an denen sich die feinsten Schwebeteilchen anlagern können. Der Reinigung dienen vertikal bewegliche Ringkörper 5, die über die Bürstenkörper 4 zu streifen sind. Alle Ringkörper sind dabei durch eine Rahmenkonstruktion zu einer einheitlichen Abstreifeinrichtung 6 verbunden.

## Ansprüche

1. Abscheider für Leichtflüssigkeiten mit einem im Abscheideraum zwischen dem Ein- und Auslauf, angeordneten abscheidewirksamen Material,
dadurch gekennzeichnet, daß Bürstenkörper (4) als abscheidewirksames Material im Strömungsweg angeordnet sind.

2. Abscheider nach Anspruch 1,
dadurch gekennzeichnet, daß mehrere Bürstenkörper in Reihen, versetzt oder hintereinander, angeordnet sind.

3. Abscheider nach den Ansprüchen 1 und 2,
dadurch gekennzeichnet, daß die Bürstenkörper (4) als stehende oder liegende, stabförmige Träger (4') mit radial nach außen weisenden Borsten (4") ausgebildet sind.

4. Abscheider nach den Ansprüchen 1 bis 3,
dadurch gekennzeichnet, daß jedem Bürstenkörper (4) ein axial beweglicher, geschlossener oder offener Ringkörper (5) als Abstreifelement zugeordnet ist.

5. Abscheider nach dem Anspruch 4,
dadurch gekennzeichnet, daß die Ringkörper 5 zum Erzeugen einer Ringbrause hohl ausgebildet und an einen Spülwasserzulauf angeschlossen sind.

6. Abscheider nach den Ansprüchen 1 bis 5,
dadurch gekennzeichnet, daß die vertikal beweglichen Ringkörper (5) aller Bürstenkörper (4) zu einer einheitlichen Abstreifeinrichtung (6) verbunden sind.

7. Abscheider nach den Ansprüchen 1 und 2,
dadurch gekennzeichnet, daß die Bürstenkörper als stehende oder liegende, flache Träger mit rechtwinklig abstehenden Borsten in Besenform ausgebildet sind und daß jedem Bürstenkörper ein über die Borsten zu bewegendes Abstreifelement zugeordnet ist.

8. Abscheider nach Anspruch 1,
dadurch gekennzeichnet, daß die Borsten der Bürstenkörper aus Polypropylen bestehen.

4" 4' 5    654' 4"

1

2

3

4        4

Fig. 1

Fig. 1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 794 583  (H.M. RHODES) * Insgesamt * | 1-3,8 | B 01 D  17/022 |
| A | | 4,7 | E 03 F  5/16 |
| | --- | | C 02 F  1/40 |
| X | DE-C- 246 428  (R. NOWACKI) * Insgesamt * | 1,2 | |
| A | | 3 | |
| | --- | | |
| X | WO-A-8 803 831  (INST. NAT. DES SCIENCES APPL.) * Zusammenfassung; Ansprüche 8,11-13,16; Figuren 1-3 * | 1,3,8 | |
| | --- | | |
| A | DE-A-3 403 718  (PASSAVANT-WERKE AG) * Zusammenfassung; Figuren 1,2; Ansprüche 1,2,10 * | 1,5 | |
| | --- | | |
| A | DE-U-8 616 702  (BUDERUS AG) * Insgesamt * | 1 | |
| | ----- | | |

RECHERCHIERTE SACHGEBIETE (Int. Cl.5)

B 01 D
C 02 F·

Der vorliegende Recherchenbericht wurde für alle Patentansprüche erstellt

| Recherchenort | Abschlußdatum der Recherche | Prüfer |
|---|---|---|
| DEN HAAG | 14-09-1989 | HOORNAERT P.G.R.J. |

EPO FORM 1503 03.82 (P0403)